# EUROPÄISCHE PATENTANMELDUNG

(11) **EP 1 563 914 A1**
(43) Veröffentlichungstag der Anmeldung: **17.08.2005**
(21) Anmeldenummer: 04003264.1
(22) Anmeldetag: 13.02.2004
(51) Int. Cl.: B05C 5/02, B05C 11/10, B41J 3/32, G09B 21/02, B41M 3/16

(54) **Verfahren und Vorrichtung zur Herstellung einer ertastbaren Markierung**

(71) Anmelder: NORDSON CORPORATION, Westlake, Ohio 44145-1119 (US)
(72) Erfinder: Göhlert, Ralph W., 40699 Erkrath (DE); Dutoit, Nicolas, 59551 Attiches (FR)
(74) Vertreter: Eisenführ, Speiser & Partner

(57) **Zusammenfassung**

Die Erfindung betrifft ein Verfahren, eine Verwendung und eine Materialauftragsvorrichtung zur Herstellung einer ertastbaren Markierung (302; 312; 322; 332; 342; 602; 702) auf einer Oberfläche mit den Schritten: Auftragen eines flüssigen, auf der Oberfläche haftenden Materials aus mindestens einer Düsenöffnung (441a, b) mindestens eines Auftragskopfs (100; 200; 400) auf die Oberfläche und Aushärten des flüssigen Materials.

## Beschreibung

Die Erfindung betrifft ein Verfahren zur Herstellung einer ertastbaren Markierung auf einer Oberfläche. Die Erfindung betrifft weiterhin eine Verwendung einer Vorrichtung zur Herstellung einer zuvor beschriebenen Markierung und eine Vorrichtung, welche zur Herstellung nach dem erfindungsgemäßen Verfahren ausgebildet ist.

Es ist gängige Praxis, Gefahrenbereiche oder gefährliche Produkte mittels Warnschildern oder Symbolen auf der Produktverpackung zu kennzeichnen, um Verbraucher auf allgemeine oder spezielle Gefahren hinzuweisen. So wird beispielsweise mit Hilfe genormter Symbole auf das Vorhandensein von Reizstoffen, Giftstoffen, ätzenden oder brennbaren Stoffen hingewiesen. Die Gefahrensymbole sind dabei beispielsweise auf Schildern angebracht oder sind auf die Produktverpackung eines Produktes aufgedruckt und können visuell wahrgenommen werden.

Ein Problem dieser Warnhinweise ist, dass sie nur von Verbrauchern wahrgenommen werden können, die über ein intaktes Augenlicht verfügen, d.h. die keine Sehbehinderung haben. Es kommt daher immer wieder zu Unfällen mit solchen Gefahrstoffen oder in solchen Gefahrbereichen, da Sehbehinderte oder blinde Menschen nicht ausreichend vor den Gefahren gewarnt werden. In verschiedenen Ländern werden daher derzeit Anstrengungen unternommen, um gefährliche Produkte mittels taktiler Symbole zu kennzeichnen und eine solche Kennzeichnung vorzuschreiben. Dies stellte insbesondere die Hersteller oder Anbieter von kennzeichnungspflichtigen Produkten oder von Produktverpackungen für solche kennzeichnungspflichtigen Produkte vor das Problem, eine solche Kennzeichnung kurzfristig vorzunehmen. Vorzugsweise sollte diese Kennzeichnung möglichst ohne nennenswerten zusätzlichen Fertigungsaufwand erfolgen.

Die Prägung einer Produktverpackung, ähnlich wie bei der Brailleschrift, hat sich als nicht kompatibel mit den meisten Produktfertigungslinien und teilweise als zu wenig ertastbar erwiesen. Auch andere Ansätze, wie beispielsweise die Verwendung von entsprechend konturierten Aufklebern oder Klebestreifen haben sich als zu aufwendig und zu wenig variabel erwiesen.

Der Erfindung liegt die Aufgabe zugrunde, ein Verfahren zur Herstellung einer ertastbaren Markierung bereitzustellen, welches besser geeignet ist als die derzeit bekannten Verfahren.

Die Aufgabe wird erfindungsgemäß gelöst mit einem eingangs genannten Verfahren mit den Schritten:
- Auftragen eines flüssigen, auf der Oberfläche haftenden Materials aus mindestens einer Düsenöffnung mindestens eines Auftragskopfs auf die Oberfläche,
- Aushärten des flüssigen Materials.

Das mit dem erfindungsgemäßen Verfahren aufgetragene Material bildet eine durch Adhäsivkräfte mit der Oberfläche verbundene Erhebung auf der Oberfläche, die, nachdem sie ausgehärtet ist, als leicht ertastbare Markierung dienen kann. Auf diese Weise kann auch mit einfachen Mitteln auf der Oberfläche zum Beispiel einer Produktverpackung ein taktil ertastbares Symbol aufgebracht werden.

Als Auftragsmaterial eignet sich beispielsweise ein physikalisch oder chemisch vernetzender Kunststoff, wie z. B. ein Heißschmelzklebestoff oder ein Zwei-Komponenten-Klebstoff oder ein mittels Strahlung, vorzugsweise ultravioletter Strahlung aushärtbares Material oder Lack. Weiterhin eignen sich Klebstoffe auf Lösungsmittelbasis zur Anwendung in dem erfindungsgemäßen Verfahren. Insbesondere geeignet sind Materialien, die im ausgehärteten Zustand transparent sind, um so das optische Erscheinungsbild der Produktverpackung möglichst wenig zu beeinflussen.

Die ertastbare Markierung kann aus einer Anordnung einer Vielzahl von Einzelpunkten, Strichen, oder anders geformten aufgetragenen Bereichen zusammengesetzt sein. Die aufgetragenen Punkte, Striche oder Raupen werden in einer solchen Dicke aufgetragen, dass Sie soweit erhaben auf einer Oberfläche aufliegen, dass sie deutlich von einer menschlichen Hand ertastet werden können. Insbesondere können mit dem erfindungsgemäßen Verfahren national oder international gebräuchliche Warnsymbole auf der Oberfläche aufgebracht werden.

Bei einer ersten vorteilhaften Ausführungsform wird das Material auf mehrere voneinander beabstandete Bereiche der Oberfläche aufgetragen. Hierdurch kann die Geometrie üblicher Warnsymbole aufgetragen werden. Dabei ist einerseits eine Lösung vorteilhaft, bei der mehrere Bereiche nacheinander mittels Auftrags aus einer ode mehreren Düsenöffnung(en) mit dem Material beschichtet werden, indem zwischen den einzelnen Beschichtungsvorgängen die Düsenöffnung(en) und die Oberfläche relativ zueinander bewegt werden. Weiterhin ist es alternativ vorteilhaft, das Material aus mehreren voneinander beabstandeten Düsenöffnungen gleichzeitig oder zeitlich zueinander versetzt aufzutragen.

Es ist insbesondere vorteilhaft, wenn das Material in Form eines oder mehrerer Punkte aufgetragen wird. Dabei können die Punkte voneinander beabstandet aufgetragen werden oder die Punkte können aufeinander auftragen werden. Bei einem Auftrag der Punkte übereinander kann, insbesondere wenn mit dem Auftrag eines nachfolgenden Punktes abgewartet wird bis der zuvor aufgetragene Punkt ausgehärtet ist, eine stärker erhabene Markierung erzeugt werden und somit eine besser ertastbare Markierung auf der Oberfläche hergestellt werden. Von einer Oberfläche erhaben abstehende Punkte sind ein übliches Kennzeichnungsmittel für die meisten Warnsymbole.

Es ist weiterhin vorteilhaft, wenn das Material aus mehreren voneinander beabstandeten Düsenöffnungen des Auftragskopfes aufgetragen wird. Auf diese Weise kann das Material gleichzeitig aus den mehreren Düsenöffnungen in einem vorbestimmten Abstand aufgetragen werden und somit eine schnelle Verarbeitungszeit realisiert werden. Dabei kann die geometrische Anordnung der beabstandeten Düsenöffnungen der Geometrie der herzustellenden Markierung entsprechen. Diese fortgebildete Verfahrensform eignet sich insbesondere für die immer wiederkehrende Herstellung eines genormten, ertastbaren Symbols. Gemäß einer Variante wird das Material in einem Nicht-Kontakt-Verfahren aufgetragen, gewissermaßen aufgeschossen.

Gemäß einer bevorzugten Ausführungsform ist es vorteilhaft, wenn das Material aus mehreren Auftragsköpfen mit jeweils mindestens einer Düsenöffnung aufgetragen werden. Die Verwendung mehrerer Auftragsköpfe macht das erfindungsgemäße Verfahren universeller, indem die verschiedenen Auftragsköpfe relativ zueinander bewegbar sind, mit verschiedenen Auftragsmaterialien versorgt werden können und somit eine Vielzahl ertastbarer Markierungen mit verschiedenen Abmessungen und gegebenenfalls mit Markierungsbereichen mit unterschiedlichen Markierungsmaterialien hergestellt werden können.

Alternativ kann das Material mittels eines Auftragskopfes aufgetragen werden, welcher eine Düsenanordnung mit mehreren Düsenöffnungen zum Abgeben des Materials aufweist. Die mehreren Düsenöffnungen sind dabei in einer an den Anwendungsfall angepassten geometrischen Anordnung relativ zueinander, beispielsweise in einer dreieckigen Anordnung.

Gemäß einer alternativen Ausführungsform kann das Material auch in einem Kontakt-Verfahren aufgetragen werden, sei es mittels einer Auftragswalze, von der das Material abgegeben, oder sei es in einer Art Stempelverfahren. Beim Auftrag in einem Kontaktverfahren ist es besonders bevorzugt, dass das Material mittels einer Düsenanordnung aufgetragen wird, in welcher im Bereich der Austrittsöffnung ein Einsatz vorgesehen ist, der als ein gesintertes Teil, vorzugsweise ein Sintermetallteil ausgebildet ist und eine Vielzahl von miteinander kommunizierenden Hohlräumen aufweist. Durch eine solche Düsenanordnung mit einem Sinter-Einsatz aus einem gesinterten Material können in vorteilhafter Weise Auftragsbilder aus dem ertastbaren Material in nahezu beliebigen Formen aufgebracht werden, indem beispielsweise die mit der Oberfläche in Kontakt kommende Oberfläche des gesinterten Einsatzes eine dreieckige, runde, rechteckige, quadratische oder anderweitig beliebige Form aufweist. Ein weiterer Vorteil ist, dass eine gewünschte Dicke der Markierung recht genau erreicht werden kann.

Wird das Material auf mehrere voneinander beabstandete Bereiche der Oberfläche aufgetragen, so ist es insbesondere vorteilhaft, wenn das Material in einem ersten Schritt auf einen oder mehrere Bereiche aufgetragen wird, in einem zweiten Schritt auf einen oder mehrere Bereiche aufgetragen wird, und zwischen dem ersten und dem zweiten Schritt die Oberfläche und die Düsenöffnung(en) relativ zueinander bewegt werden. Auf diese Art und Weise kann mit einer vergleichsweise einfachen Vorrichtung eine komplexe ertastbare Markierung hergestellt werden, indem der Zyklus des Auftrags und der Relativbewegung mehrfach aufeinander wiederholt wird und somit eine Vielzahl voneinander beabstandeter Bereiche mittels nur eines Auftragskopfs mit nur einer Düsenöffnung beschichtet wird.

Es ist insbesondere vorteilhaft, wenn das Material ein heißschmelzender Klebestoff ist, der im erwärmten Zustand aufgetragen wird und durch Abkühlung ausgehärtet wird. Ein Heißschmelzklebestoff kann einerseits mittels gezielter Erwärmung in einen flüssigen oder flüssig-pastösen Zustand gesetzt werden, der einen Auftrag einer Markierung erlaubt und einen Verlauf der Markierung nach dem Auftrag verhindert. Andererseits erlaubt ein heißschmelzender Klebstoff eine schnelle Produktion der ertastbaren Markierung, da er schnell mittels Abkühlung in einen ausgehärteten Zustand überführt werden kann. Heißschmelzende Klebstoffe sind darüber hinaus kostengünstig und sind als transparenter Klebstoff erhältlich und haften auf einer Vielzahl von Oberflächen.

Bei einer weiteren vorteilhaften Fortbildung des erfindungsgemäßen Verfahrens wird das Material auf mehrere voneinander beabstandete Bereiche der Oberfläche aufgetragen und die Oberfläche und die Düsenöffnung(en) während des Auftrags relativ zueinander bewegt. Durch die Relativbewegung von Oberfläche und Düsenöffnung während des Auftrags kann eine linienförmige Markierung auf der Oberfläche hergestellt werden. Die Relativbewegung der Düsenöffnung zu der Oberfläche kann einerseits beispielsweise durch Bewegung der Oberfläche bei feststehender Düsenöffnung erzielt werden. Andererseits ist es möglich, die Düsenöffnung beispielsweise translatorisch oder rotatorisch zu bewegen, beispielsweise indem der Auftragskopf bei feststehender Oberfläche bewegt wird. Auf diese Weise können beliebige gerade oder gekrümmte ertastbare Linien auf der Oberfläche hergestellt werden.

Eine weitere vorteilhafte Verfahrensform sieht vor, dass das Material auf mehrere Bereiche der Oberfläche aufgetragen wird, welche in mindestens zwei zueinander senkrechten Raumrichtungen voneinander beabstandet sind. Dabei wird erfindungsgemäß die Beabstandung in der ersten Raumrichtung realisiert, indem die Düsenöffnungen voneinander beabstandet sind und die Beabstandung in der zweiten Raumrichtung wird realisiert, indem eine Realtivbewegung zwischen Düsenöffnungen und Oberfläche erzeugt wird. Mit dieser erfindungsgemäßen Fortbildung ist ein besonders effizienter und schneller Auftrag einer Markierung möglich, die mehrere in zwei Raumrichtungen voneinander beabstandete Bereiche aufweist.

Dabei können sich die Markierungen auch in der zweiten Raumrichtung erstrecken, beispielsweise in Form einer ertastbaren Linie. In diesem Fall wird die Relativbewegung während des Auftrags erzeugt. Alternativ können Markierungen mit mehreren, beispielsweise punktförmigen Bereichen auf der Oberfläche erzeugt werden, die voneinander in zwei Raumrichtungen beabstandet sind. In diesem Fall wird ein oder mehrere Bereich(e) in einem ersten Beschichtungsvorgang beschichtet, hierauf folgend die Beschichtung beendet und eine Relativbewegung in der zweiten Raumrichtung erzeugt, und danach ein zweiter Beschichtungsvorgang vorgenommen. Diese Verfahrensform kann aus mehreren, beliebig vielen Beschichtungsvorgängen mit dazwischen stattfindenden Relativbewegungen ausgeführt werden, um komplexe ertastbare Markierungen auf der Oberfläche herzustellen. Dabei kann alternativ eine Bewegung in der ersten Raumrichtung oder sogar in einer dritten Raumrichtung realisiert werden, beispielsweise um ein komplexes Muster zu realisieren, oder um einer gekrümmten Oberfläche zu folgen.

Es ist insbesondere vorteilhaft, wenn die Düsenöffnungen des Auftragskopfs mit einem Materialreservoir verbunden sind und diese Verbindung mittels eines elektrisch betätigbaren Ventils unterbrochen werden kann. Durch die Verwendung eines elektrisch betätigbaren Ventils ist die Materialzufuhr aus dem Materialreservoir sehr präzise steuerbar und folglich können sehr kurze und schnell aufeinander folgende Auftragsvorgänge realisiert werden. Es ist weiterhin vorteilhaft, wenn der Auftragskopf elektrisch beheizt ist. Diese Fortbildung des erfindungsgemäßen Verfahrens ist insbesondere vorteilhaft, wenn ein heißschmelzender Klebstoff als Material verwendet wird. Weiterhin ist diese Verfahrensform vorteilhaft, wenn ein vernetzender Klebstoff verwendet wird, dessen Vernetzung durch Wärmeeinfluss beeinflusst, insbesondere gestartet, beschleunigt oder verzögert wird. Alternativ kann auch ein solches Material verwendet werden, dass mittels Strahlung, vorzugsweise ultravioletter Strahlung ausgehärtet wird und vor der Bestrahlung zur Konstanthaltung der Viskosität temperiert wird auf beispielsweise 40° Celsius.

Schließlich sieht eine weitere vorteilhafte Ausbildungsform des erfindungsgemäßen Verfahrens vor, dass die Relativbewegung und der Zeitpunkt und die Dauer der Abgabe des Materials so gesteuert wird, dass ein ertastbares Warnsymbol, insbesondere drei im Dreieck angeordnete Punkte, auf die Oberfläche aufgetragen wird. Auf diese Weise kann ein international gebräuchliches Warnsymbol besondere schnell und einfach erzeugt werden.

Ein weiterer Aspekt der Erfindung ist ein Verfahren zur Herstellung einer Produktverpackung mit einer ertastbaren Markierung, bei dem die ertastbare Markierung nach einem der voranstehend beschriebenen Verfahren hergestellt wird.

Dieser Aspekt der Erfindung kann fortgebildet werden, indem die ertastbare Markierung auf eine Oberfläche des Produkts oder der Produktverpackung aufgetragen wird, nachdem das Produkt hergestellt und gegebenenfalls. in der Produktverpackung verpackt wurde. Auf diese Weise wird eine besonders einfache Ergänzung bestehender Fertigungslinien für Produkte oder Produktverpackungen bereitgestellt, mit der eine ertastbare Markierung auf der Produktverpackung oder dem Produkt hergestellt wird. Ein weiterer Aspekt der Erfindung ist die Verwendung einer Materialauftragsvorrichtung mit mindestens einer Düsenöffnung zur Abgabe eines flüssigen, aushärtbaren Materials auf eine Substratoberfläche und Mittel zur Relativbewegung der Düsenöffnung zu der Substratoberfläche, zur Herstellung einer ertastbaren Markierung. Hierdurch wird eine besonders einfache Herstellung einer ertastbaren Markierung mit einer Vorrichtung zum Auftrag eines Klebstoffs auf eine Oberfläche erzielt.

Dieser Aspekt kann fortgebildet werden, indem als Material ein heißschmelzender Klebstoff aufgetragen wird und die Vorrichtung zur Abgabe des heißschmelzenden Klebstoffs ausgebildet ist. Die Verwendung eines heißschmelzenden Klebstoffs ist aus den bereits genannten Gründen besonders vorteilhaft zur Ausbildung ertastbarer Markierungen auf einer Vielzahl von Oberflächen. Um die Vorrichtung zur Abgabe des heißschmelzenden Klebstoffs auszubilden, ist es insbesondere erforderlich, eine entsprechende, beheizte Materialzufuhr bereitzustellen und den Auftragskopfs gegebenenfalls zu beheizen.

Dieser Aspekt kann weiter fortgebildet werden, indem die Vorrichtung Steuerungsmittel zum Steuern der Relativbewegung, des Zeitpunkts und/oder der Dauer der Abgabe des Materials umfasst, insbesondere zum Steuern des Auftrags gemäß Anspruch 12. Die Steuerungsmittel steuern die Relativbewegung vorteilhafterweise über elektrische, hydraulische oder pneumatische Aktuatoren. Diese Aktuatoren können entweder den Auftragskopf bewegen oder alternativ hierzu die zu beschichtende Oberfläche bewegen. Die Steuerung des Zeitpunkts und/oder der Dauer der Materialabgabe erfolgt vorteilhafterweise mittels Ansteuern eines Ventils, welches die Materialabgabe freigibt oder blockiert.

Ein weiterer Aspekt der Erfindung ist eine Materialauftragsvorrichtung, umfassend mindestens zwei voneinander beabstandete Düsenöffnungen zur Abgabe eines flüssigen, aushärtbaren Materials auf eine Substratoberfläche, dadurch gekennzeichnet, dass der Abstand der Düsenöffnungen voneinander in einer ersten Raumrichtung dem Abstand zweier Markierungselemente eines ertastbaren Symbols entspricht. Diese Materialauftragsvorrichtung ist erfindungsgemäß zur effizienten und schnellen Herstellung von ertastbaren Markierungen mit bestimmten Abmessungen fortgebildet und ermöglicht somit die Ausführung der zuvor beschriebenen erfindungsgemäßen Verfahren.

Dabei ist es insbesondere vorteilhaft, wenn die Materialauftragsvorrichtung Mittel zur Erzeugung einer Relativbewegung zwischen den Düsenöffnungen und der Substratoberfläche in einer zweiten Raumrichtung, welche etwa senkrecht zu der ersten Raumrichtung steht, umfasst.

Auf diese Weise wird eine schnelle und einfach in bestehende Produktionslinien einsetzbare Vorrichtung für die Herstellung einer ertastbaren Markierung bereitgestellt.

Vorteilhafte Ausführungsformen des erfindungsgemäßen Verfahrens und der erfindungsgemäßen Vorrichtung bzw. Verwendung sind in den Unteransprüchen angegeben und werden nachfolgend anhand von Ausführungsbeispielen unter Bezugnahme der anhängenden Figuren beschrieben. Es zeigen:
- Figur 1: eine geschnittene Seitenansicht eines Auftragskopfes einer erfindungsgemäßen Materialauftragsvorrichtung zur Ausführung des erfindungsgemäßen Verfahrens und zur erfindungsgemäßen Verwendung,
- Figur 2a) - c): einen schematischen Ablauf des erfindungsgemäßen Verfahrens,
- Figur 3a) - e): eine schematische Darstellung von vier Produktverpackungen mit ertastbaren Markierungen gemäß des erfindungsgemäßen Verfahrens,
- Figur 4: eine perspektivische Ansicht von schräg vorne oben einer zweiten Ausführungsform eines Auftragskopfes einer erfindungsgemäßen Materialauftragsvorrichtung zur Ausführung des erfindungsgemäßen Verfahrens und zur erfindungsgemäßen Verwendung im Einsatz zur Erzeugung einer ertastbaren Markierung auf einer flaschenförmigen Verpackung,
- Figur 5: eine perspektivische Ansicht von schräg vorne hinten des Auftragskopfes der Figur 4,
- Figur 6: eine perspektivische Ansicht von schräg vorne oben des Auftragskopfes der Figur 4 im Einsatz zur Erzeugung einer ertastbaren Markierung auf einer schachtelartigen Produktverpackung,
- Figur 7: eine perspektivische Ansicht von unten des Auftragskopfes der Figur 6, und
- Figur 8: eine perspektivische Ansicht von schräg vorne oben des Auftragskopfes der Figur 4 im Einsatz zur Erzeugung einer ertastbaren Markierung auf einer ebenen Fläche; und
- Figur 9: eine schematische Darstellung eines Sensors und einer Steuerungseinrichtung zur berührungslosen Erfassung der aufgetragenen ertastbaren Markierung.

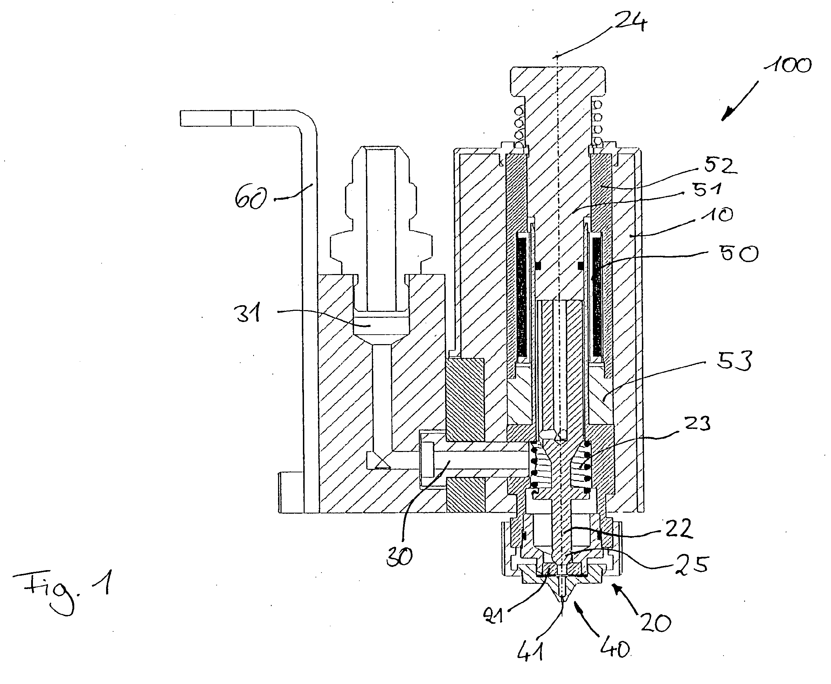

Der in Figur 1 dargestellte Auftragskopf 100 umfasst einen Grundkörper 10, mit einer Ventilanordnung 20 und einem Materialzuführkanal 30, der mit einem Anschlussadapter 31 verbunden ist. Alternativ können auch andere Modelle von Auftragsköpfen verwendet werden.

Die Ventilanordnung 20 umfasst einen Ventilsitz 21 und einen relativ zum Ventilsitz 21 bewegbaren Ventilkörper 22. Der Ventilkörper ist relativ zum Ventilsitz bewegbar und wird mittels einer Vorspanneinrichtung in Form einer Spiralfeder 23 in die Schließstellung gedrückt. Der als längliche Nadel ausgebildete Ventilkörper 22 ist axial in Richtung der Längsachse 24 translatorisch hin und her bewegbar und ist aus der Schließstellung, in der ein kugelförmig ausgebildeter Abschnitt 25 im Kontakt mit dem Ventilsitz 21 ist in eine Öffnungsstellung bewegbar, in der der kugelförmig ausgebildete Abschnitt 25 außer Kontakt mit dem Ventilsitz 21 ist.

Der Ventilsitz 21 ist Teil einer Düsenanordnung 40, welche ferner eine Austrittsöffnung 41 umfasst. In der Öffnungsstellung kann Material von dem Anschlussadapter 31 über den radial zum Ventilkörper 22 angeordneten Zuführkanal 30 zwischen dem kugelförmig ausgebildeten Abschnitt 25 und dem Ventilsitz 21 hindurchfließen und die Düsenanordnung 40 durch die Austrittsöffnung 41 verlassen.

Der Ventilkörper 22 wird mittels einer Antriebseinrichtung in Form einer elektromagnetischen Spulenanordnung mit einer ringförmigen Spule 60 bewegt, die ein Magnetfeld erzeugt, mit dessen Hilfe eine Kraft in Richtung der Achse 24 auf den Ventilkörper 22 ausgeübt wird. Zu diesem Zweck sind teilweise innerhalb der ringförmigen Spule 50 ein Polstück 51 und außerhalb der Spule 50 Flussringe 52, 53 angeordnet und ebenso wie die Spule 50 magnetisch wirksam. Durch Anordnung des Polstücks 51 und der Flussringe 52, 53 lässt sich ein starkes magnetischen Feld so formen, dass eine starke Axialkraft auf den Ventilkörper 22 aufbringbar ist, um den Ventilkörper 22 schnell und zeitlich präzise in Zusammenwirkung mit der Spiralfeder 23 zu bewegen.

Der Auftragskopf kann über ein Profil 60 an einem Gestell einer Auftragsvorrichtung befestigt werden.

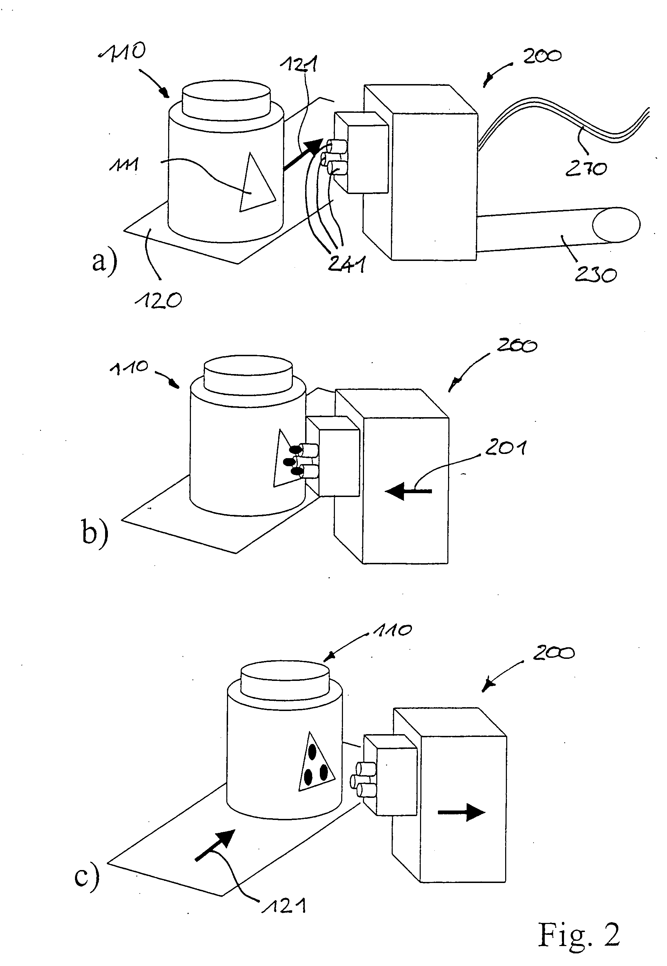

Figur 2 zeigt den Ablauf des Verfahrens zur Herstellung einer erfassbaren Markierung. Zunächst wird gemäß Figur 2a) eine zylindrische Produktverpackung 110 auf einem Förderband 120 in einer ersten Richtung 121 bewegt. Auf der Produktverpackung 110 ist bereits ein optisch wahrnehmbares Warnsymbol 111 aufgedruckt oder in Form eines Aufklebers aufgebracht. Alternativ kann jedoch auch direkt auf eine Verpackung oder ein Produkt die ertastbare Markierung aufgebracht werden. Die Produktverpackung 110 wird mittels des Laufbandes 120 zu einem Auftragskopf 200 gefördert. Der Auftragskopf 200 weist drei im Dreieck angeordnete Austrittsöffnungen 241 auf, die mit einer Ventilanordnung. (nicht sichtbar) im Inneren des Auftragskopfes 200 kommunizieren. Die Ventilanordnung im Inneren des Auftragskopfes 200 wird über eine Materialzuführleitung 230 mit Auftragsmaterial versorgt. Das Öffnen und Schließen der Ventilanordnung wird über einer Steuerleitung 270, welche mit einer Steuerungseinheit verbunden ist, gesteuert.

Der Auftragskopf 200 weist vorzugsweise eine Erwärmungsvorrichtung (nicht sichtbar) auf, um heißschmelzendes Auftragsmaterial zu verarbeiten. Das heißschmelzende Material wird dann bei einer Temperatur verarbeitet, bei der es eine Viskosität aufweist, die einerseits einen guten Auftrag ermöglicht und andererseits eine gute Haftung auf der Produktverpackung erzielt ohne nach dem Auftrag zu verlaufen. Um eine schnelle Aushärtung des Auftragsmaterials erzielen zu können, müssen zusätzlich Mittel zur Kühlung des Auftragsmaterials nach dem Auftrag vorgesehen werden.

Wenn die Produktverpackung 110 in den Bereich des Auftragskopfes 200 gefördert wurde, so wird, wie ersichtlich aus Figur 2b), der Auftragskopf 200 translatorisch in Richtung 201 auf die Produktverpackung zu bewegt, bis die Austrittsöffnungen unmittelbar vor der Oberfläche der Produktverpackung angeordnet sind oder sogar Kontakt zu der Produktverpackungsoberfläche haben. Hierauf folgend wird die Ventilanordnung angesteuert und eine vorbestimmte Menge Auftragsmaterial aus den Austrittsöffnungen 241 abgegeben, welche auf dem optischen Warnsymbol an der Oberfläche der Produktverpackung 110 haftet.

Hierauf folgend wird, bezugnehmend zu Figur 2c), der Auftragskopf 200 entgegengesetzt zur Richtung 201 translatorisch von der Produktverpackung wegbewegt und die Produktverpackung 110 wird weiter in Richtung 121 gefördert.

Die zuvor beschriebenen Verfahrensschritte zur Herstellung einer ertastbaren Markierung können in sehr schneller Folge ausgeführt werden. Insbesondere kann die translatorische Bewegung des Auftragskopfes und die Abgabe des Auftragsmaterials aus den Austrittsöffnungen 241 so schnell erfolgen, dass das Förderband nur sehr kurz gestoppt werden muss oder überhaupt nicht gestoppt werden muss, um den Auftragsvorgang auszuführen.

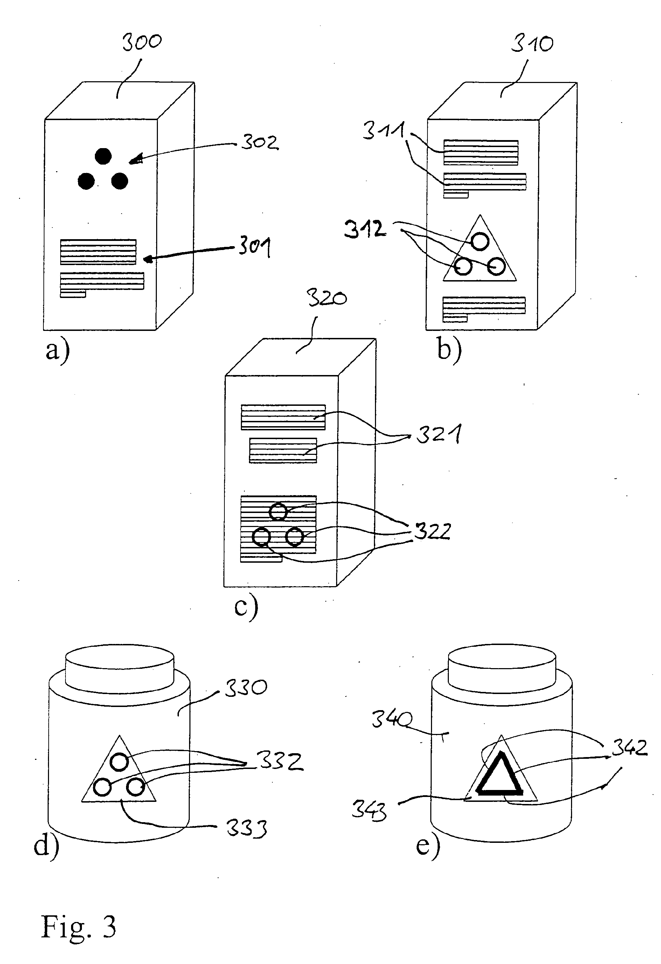

Figur 3a) zeigt eine quadratische Produktverpackung 300 mit einem Textaufdruck 301 und einer oberhalb dieses Textaufdrucks aufgebrachten ertastbaren Markierung 302. Die ertastbare Markierung 302 umfasst drei im Dreieck angeordnete Punkte, welche den Anforderungen an ertastbare Warnsymbole nach der EU-Richtlinie 1999/45 entsprechen. Die Punkte haben einen Durchmesser von etwa 2mm und der Abstand zwischen jeweils zwei Punkten ist etwa 3 - 9mm.

Die ertastbare Markierung 302 kann aus einem transparenten Material oder aus einem intransparenten, insbesondere einem eingefärbtem Material hergestellt werden. Vorzugsweise ist die Markierung aus einem mit einem Farbstoff eingefärbtem Klebstoff, insbesondere eingefärbtem Heißschmelzklebstoff gebildet.

Figur 3b) zeigt eine alternative Produktverpackung 310 mit Beschriftungen 311 und einem optischen Warnsymbol in Form eines Dreieckes 313. Auf dem Warnsymbol 313 sind wiederum drei Punkte 312 in Dreieckform angeordnet, welche vorzugsweise aus einem transparenten Material bestehen und den Anforderungen der zuvor beschriebenen EU-Richtlinie genügen.

Figur 3c) zeigt eine weitere alternative Produktverpackung 320 mit Beschriftungen 321 und einem ertastbaren Warnsymbol 312 gemäß der zuvor beschriebenen EU-Richtlinie. Das Warnsymbol 312 ist auf einem Beschriftungsteil aufgebracht und besteht aus einem transparenten Material.

Figur 3d) zeigt eine zylindrische Produktverpackung 330 mit einem aufgeklebten oder aufgedruckten optisch wahrnehmbaren Warnsymbol 333, auf dem wiederum ein ertastbares Warnsymbol in Form von drei Punkten 332 aufgebracht ist.

Figur 3e) zeigt eine quadratische Produktverpackung 340 mit einem optisch wahrnehmbaren Warnsymbol 343. Auf dem optisch wahrnehmbaren Warnsymbol 343 ist eine ertastbare Dreieckskontur in Gestalt dreier sich zum Dreieck schließender erstastbarer Linien 342 aufgetragen, welche ein ertastbares Warnsymbol gemäß der EU-Richtlinie 1999/45 darstellen. Das Dreieck hat vorzugsweise eine Seitenlänge von 18mm ± 2mm oder ist ein in der Größe reduziertes Symbol mit einer Kantenlänge von 9mm ± 2mm. Bei bestimmten Verpackungen, insbesondere sehr kleinen Verpackungen kann die Verwendung eines weiter in der Größe reduzierten Symbols mit einer Kantenlänge von 3mm ± 1 mm erforderlich sein.

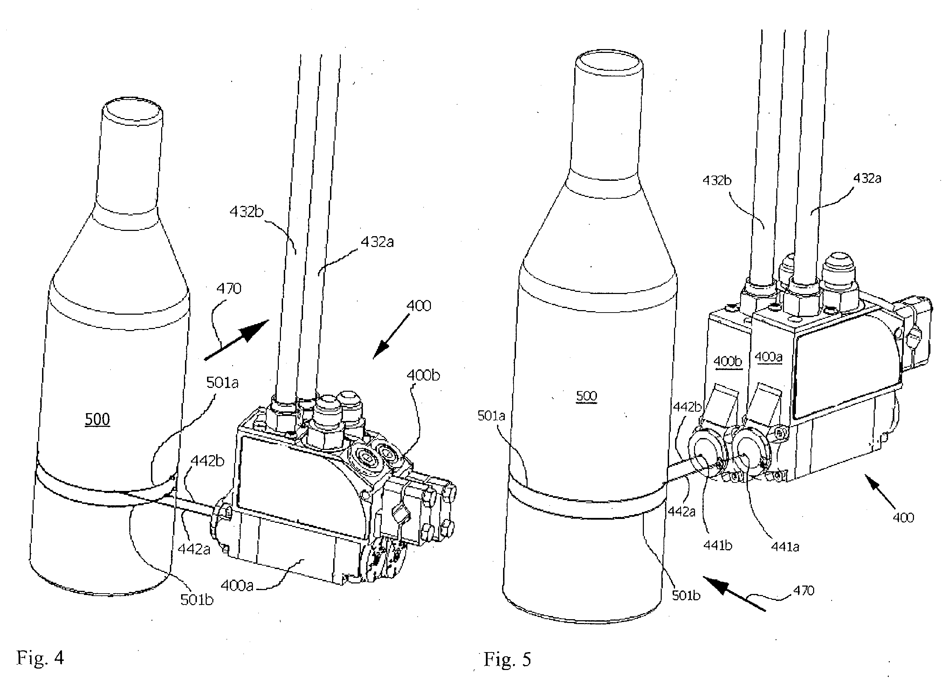

Figuren 4 und 5 zeigen eine weitere Ausführungsform eines Auftragskopfes 400, der sich aus zwei einzelnen Auftragskopfmodulen 400a, b zusammensetzt. Jedes Auftragskopfmodul 400a,b weist genau eine Düsenanordnung mit jeweils einer Düsenöffnung 441a, b auf.

Beiden Auftragskopfmodule 400a, b werden über jeweils eine Materialzuführleitung 432a, b ein heißschmelzendes Auftragsmaterial zugeführt. In den Auftragskopfmodulen 400a, b ist jeweils eine Ventilanordnung (nicht sichtbar) angeordnet, die mittels eine mit dem Auftragskopf über einer Steuerleitung verbundene Steuerungseinheit (nicht sichtbar) geöffnet und geschlossen werden kann, um so den Austritt des heißschmelzenden Auftragsmaterials aus den Düsenöffnungen 441 a, b einzeln für jedes Auftragskopfmodul 400a,b zu steuern.

Die Auftragskopfmodule 400a, b sind unmittelbar benachbart zueinander seitlich angeordnet. Sie sind jedoch in ihrer Höhe um einen gewissen Betrag versetzt, so dass ein Materialauftrag aus der Düsenöffnung 440a auf eine an dem Auftragskopf vorbeigeführte Produktverpackung 500 in einer anderen Höhe erfolgt als ein Materialauftrag aus der Düsenöffnung 441 b.

Die Richtung des Materialauftragsflusses ist in den Figuren 4 und 5 zur Verdeutlichung mittels der Linien 442a, b dargestellt. Die Höhe, in welcher der jeweilige Materialauftrag auf der Produktverpackung 500 aus den beiden Düsenöffnungen 441a, b erfolgt ist auf der Produktverpackung mittels zweier Linien 501 a, b verdeutlicht. Die Linien 501 a, b sind in einer ersten, vertikalen Richtung voneinander beabstandet. Dies ist für das erfindungsgemäße Auftragsverfahren die maßgebliche Beabstandung zweier ertastbarer Markierungselemente in der ersten Richtung. Der Auftragskopf 400 und die Produktverpackung 500 werden beim Auftragsvorgang in einer zweiten Richtung relativ zueinander bewegt. Diese zweite Richtung liegt senkrecht zur ersten Richtung und etwa senkrecht zur Auftragsrichtung.

Die zweite Richtung, also die Richtung, in der die Substrate bewegt werden, ist durch den Pfeil 470 in den Figuren 4 bis 8 dargestellt.

Bei der Herstellung einer aus drei im Dreieck angeordneten Punkten bestehenden ertastbaren Markierung mit der Auftragsvorrichtung gemäß Figuren 4, 5 wird der Ablauf wie folgt gesteuert:
- 1.: Die Produktverpackung 500 wird soweit in der zweiten Richtung 470 gefördert, dass die untere Düsenöffnung 441 b so zur Produktverpackung positioniert ist, dass sie dem ersten Eckpunkt des zu erzeugenden Dreiecks gegenüberliegt.
- 2.: Sodann wird bei kurzzeitig gestoppter Relativbewegung oder während des fortlaufenden Fördervorganges der Produktverpackung ein Heißschmelzklebstoff aus der Düsenöffnung 441 b auf die Produktverpackung abgegeben und erzeugt so einen ertastbaren Punkt.
- 3.: Hierauf folgend wird die Produktverpackung um einen geringen Betrag in Richtung 470 weitergefördert, bis die obere Düsenöffnung 341 a dem zweiten Markierungspunkt, der das obere Ende des Dreiecks darstellt, gegenüberliegt.
- 4.: Hierauf folgend wird wiederum während laufender Förderung oder kurzem Stop ein Heißschmelzklebstoff aus der Düsenöffnung 441 a auf die Produktverpackung 500 aufgetragen.
- 5.: Hierauf folgend wird die Produktverpackung 500 wiederum um ein Stück in Richtung 470 fortbewegt, bis die untere Düsenöffnung 441 b dem dritten Eckpunkt der herzustellenden Dreiecksmarkierung gegenüberliegt.
- 6.: Hierauf folgend wird wiederum aus der unteren Düsenöffnung 441 b ein Heißschmelzklebepunkt auf die Produktverpackung 500 abgegeben.

Nach Durchführung dieser Schritte ist die ertastbare Markierung auf die Produktverpackung aufgetragen und erkaltet durch Wärmeabgabe an die Umgebung und an die Produktverpackung.

Die in den Figuren 4 und 5 dargestellte Auftragskopfgestaltung kann auf einfache Weise variiert werden, um unterschiedliche erstastbare Markierungen herzustellen. Insbesondere kann durch Versetzung der beiden Auftragskopfmodule zueinander ein kleinerer oder größerer Abstand in der ersten, vertikalen Richtung zwischen den beiden Düsenöffnungen 441 a, b hergestellt werden, um auf diese Weise ertastbare Markierungen mit anderen Abmessungen herzustellen. Weiterhin ist es in bestimmten Anwendungen vorteilhaft, wenn mehr als zwei Auftragskopfmodule 300a, b nebeneinander angeordnet werden, um auf diese Weise einen Auftrag in drei oder mehr verschiedenen Höhen auf Produktverpackungen oder Ähnlichem zu erzielen. Weiterhin ist es bei bestimmten Anwendungen vorteilhaft, wenn mehrere Auftragskopfmodule vorgesehen sind und sich auf verschiedenen oder teilweise gleichen Höhen befinden, um einen besonders schnellen Auftrag eines bestimmten Musters zu erzielen.

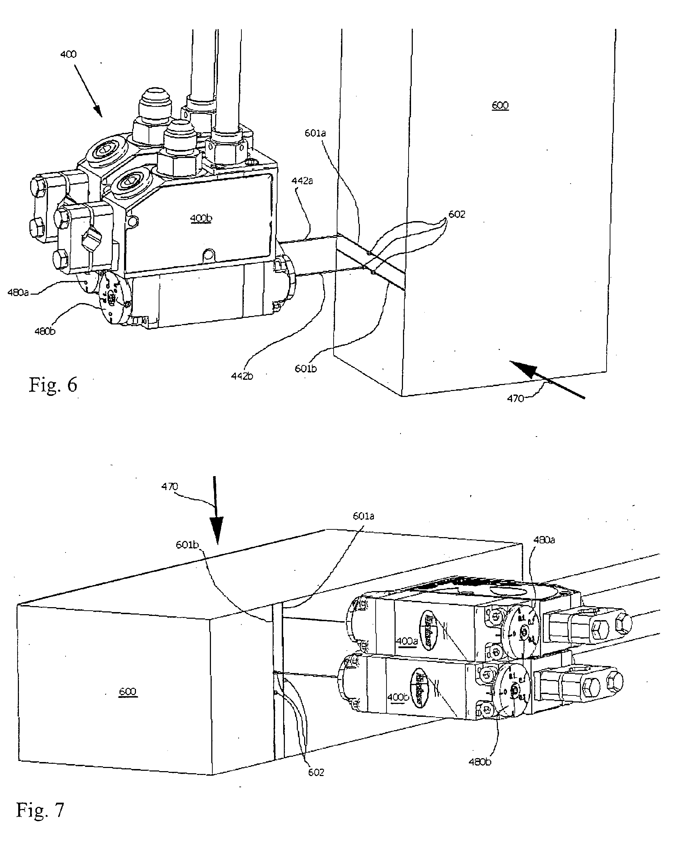

Figuren 6 und 7 zeigen die Auftragskopfanordnung der Figuren 4 und 5 in einer leicht abgewandelten Anwendung beim Auftrag einer ertastbaren Markierung 602 in zwei Auftragshöhen 601a,b auf eine quaderförmige Produktverpackung 600. Der Auftrag erfolgt nach dem gleichen Verfahrensablauf wie zuvor zu Figuren 4 und 5 beschrieben.

Weiterhin ist aus den Figuren 6 und 7 ersichtlich, dass jedes Auftragskopfmodul 400a, b ein Einstellrad 480a, b aufweist, mit dem eine Nadel-Hub-Einstellung der Ventilnadel einer Ventilanordnung des Auftragskopfmoduls vorgenommen werden kann. Der Strömungsquerschnitt zwischen Ventilnadel und Ventilsitz kann durch axiale Verstellung variiert werden.

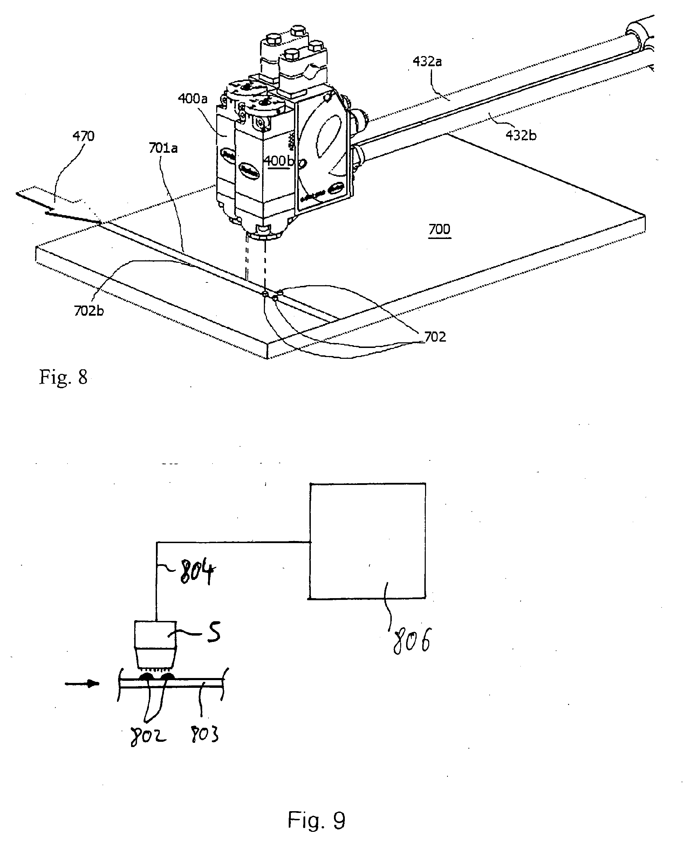

Figur 8 zeigt den Auftragskopf 400 der Figuren 4-7 in einer Anwendung zum Auftrag einer ertastbaren Markierung 702 auf eine Oberfläche mit senkrechter Auftragsrichtung. Die erfindungsgemäße Auftragsvorrichtung und das erfindungsgemäße Auftragsverfahren ist nicht auf den Auftrag in dieser senkrechten Richtung (der Schwerkraftrichtung) angewiesen, da durch die hohe Austrittsgeschwindigkeit aus der Düsenöffnung ein Auftrag des Materials sowohl in vertikaler wie auch in horizontaler Richtung möglich ist.

Figur 9 veranschaulicht schematisch eine Auftragsüberwachungseinrichtung zur berührungslosen sensorischen Erfassung einer zuvor erfindungsgemäß aufgebrachten ertastbaren Markierung, die im gezeigten Ausführungsbeispiel aus mehreren Punkten 802 aus einem Klebstoff-Material besteht, welche auf die zuvor beschriebene Weise erfindungsgemäß auf eine Oberfläche, beispielsweise einer Verpackung 803 aufgebracht wurden. Ein Sensor S, der als Infrarot-Licht-Sensor oder als induktiv wirkender Sensor vorzugsweise ausgebildet ist, erfasst berührungslos die aufgetragene Markierung. Die Markierung kann im Falle eines Infrarot-Sensors mittels einer Vielzahl von Infrarot-Lichtstrahlen abgetastet werden, indem von dem Auftragsbild der Markierung reflektierte Strahlen von Aufnehmern, die dem Sensor S zugeordnet sind, aufgenommen werden, so dass der Sensor Signale bereitstellt, die Informationen über die tatsächlich aufgetragene ertastbare Markierung (Punkte 802) beinhalten. Diese Signale werden vom Sensor S über eine Leitung 804 einer Steuerungseinrichtung 806 zugeführt, welche vorzugsweise die zentrale Steuerungseinrichtung der Materialauftragsvorrichtung ist. Diese einen Computer aufweisende Steuerungseinrichtung 806 kann anhand der Signale die tatsächliche Markierung verglichen werden mit einer vorgegebenen zu erzielenden Markierung. Entspricht die tatsächliche Markierung nicht der vorgegebenen Markierung, dann kann von der Steuerungseinrichtung 806 ein Signal oder eine von Bedienungspersonal wahrnehmbare Warnung, etwa in Form eines akustischen oder optischen Signals bereitgestellt werden, so dass entweder die Verpackung 803 automatisch oder manuell ausgesondert wird und erneut einem Auftrag gemäß der Erfindung unterzogen wird, so dass eine korrekte Markierung hergestellt wird.

Das zuvor beschriebene Verfahren ist für eine Vielzahl von Produktverpackungen verwendbar. Insbesondere die weit verbreiteten Faltboxen aus Pappe oder zylindrische Verpackungsflaschen aus Kunststoff oder Glas können mit einer ertastbaren Markierung versehen werden. Das Verfahren eignet sich aber ebenso zum Auftragen einer ertastbaren Markierung auf Kunststofftüten, Papiertüten, Blisterstreifen für Tabletten oder auf Beutel aus mehrschichtigem oder einschichtigem Material, beispielsweise Portionsbeutel oder Ähnliches. Insbesondere bei nichtebenen Oberflächen von Verpackungen wie gefüllten Beuteln lässt sich in dem erfindungsgemäßen Verfahren zur Auftragung ohne Kontakt zwischen Auftragskopf und Oberfläche eine ertastbare Markierung aufbringen.

Während die derzeitige Nutzung des Verfahrens insbesondere auf die erforderliche Kennzeichnung von gefährlichen Produkten mit einer ertastbaren Markierung abzielt, sind andere Anwendungsgebiete ebenso denkbar, wie beispielsweise die Markierung von einer bestimmten Produktoberfläche, um hierdurch eine bevorzugte Lage des Produkts auch für sehbehinderte Personen zu kennzeichnen oder das Auftragen von ertastbaren Markierungen auf unterschiedliche Produkte in geometrisch identischen Produktverpackungen zur erstastbaren Differenzierung der Produkte. Darüber hinaus ist eine Vielzahl von Anwendungsmöglichkeiten denkbar, in denen eine ertastbare Markierung als Information auf Produkten, Produktverpackungen, Warnschildern oder Ähnlichen in einer entsprechenden Gestalt aufgetragen werden.

## Patentansprüche

1. Verfahren zur Herstellung einer ertastbaren Markierung (302; 312; 322; 332; 342; 602; 702) auf einer Oberfläche mit den Schritten:
- Auftragen eines flüssigen, auf der Oberfläche haftenden Materials aus mindestens einer Düsenöffnung (441 a, b) mindestens eines Auftragskopfs (100; 200; 400) auf die Oberfläche,
- Aushärten des flüssigen Materials.

2. Verfahren nach Anspruch 1,
**dadurch gekennzeichnet, dass** das Material auf mehrere voneinander beabstandete Bereiche der Oberfläche aufgetragen wird.

3. Verfahren nach Anspruch 1 oder 2,
**dadurch gekennzeichnet, dass** das Material in Form eines oder mehrerer Punkte, insbesondere in Form mehrerer voneinander beabstandeter Punkte aufgetragen wird.

4. Verfahren nach einem der vorhergehenden Ansprüche,
**dadurch gekennzeichnet, dass** das Material aus mehreren voneinander beabstandeten Düsenöffnungen des Auftragskopfes aufgetragen werden.

5. Verfahren nach einem der vorhergehenden Ansprüche,
**dadurch gekennzeichnet, dass** das Material aus mehreren Auftragsköpfen mit jeweils mindestens einer Düsenöffnung aufgetragen werden.

6. Verfahren nach Anspruch 2 und einem der Ansprüche 3 bis 5,
**dadurch gekennzeichnet, dass** das Material
- in einem ersten Schritt auf einen oder mehrere Bereiche aufgetragen wird,
- in einem zweiten Schritt auf einen oder mehrere Bereiche aufgetragen wird, und
- zwischen dem ersten und dem zweiten Schritt die Oberfläche und die Düsenöffnung(en) relativ zueinander bewegt werden.

7. Verfahren nach einem der vorhergehenden Ansprüche,
**dadurch gekennzeichnet, dass** das Material ein heißschmelzender Klebstoff ist, der im erwärmten Zustand aufgetragen wird und durch Abkühlung ausgehärtet wird.

8. Verfahren nach einem der vorhergehenden Ansprüche,
**dadurch gekennzeichnet, dass** das Material auf mehrere voneinander beabstandete Bereiche der Oberfläche aufgetragen wird und die Oberfläche und die Düsenöffnung(en) während des Auftrags relativ zueinander bewegt werden.

9. Verfahren nach einem der vorhergehenden Ansprüche,
**dadurch gekennzeichnet, dass**
- das Material auf mehrere Bereiche der Oberfläche aufgetragen wird, welche in mindestens zwei zueinander senkrechten Raumrichtungen voneinander beabstandet sind,
- das Material aus mindestens zwei Düsenöffnungen aufgetragen wird, die in einer ersten Raumrichtung voneinander beabstandet sind, und
- die Oberfläche und die Düsenöffnungen zwischen oder während des Materialauftrags relativ zueinander in einer zweiten Raumrichtung etwa senkrecht zur ersten Raumrichtung bewegt werden.

10. Verfahren nach einem der vorhergehenden Ansprüche,
**dadurch gekennzeichnet, dass** die Düsenöffnungen des Auftragskopfs mit einem Materialreservoir verbunden sind und diese Verbindung mittels eines elektrisch betätigbaren Ventils unterbrochen werden kann.

11. Verfahren nach einem der vorhergehenden Ansprüche,
**dadurch gekennzeichnet, dass** der Auftragskopf elektrisch beheizt ist.

12. Verfahren nach einem der vorhergehenden Ansprüche,
**dadurch gekennzeichnet, dass** die Relativbewegung und der Zeitpunkt und die Dauer der Abgabe des Materials so gesteuert wird, daß ein ertastbares Warnsymbol, insbesondere drei im Dreieck angeordnete Punkte, auf die Oberfläche aufgetragen wird.

13. Verfahren zur Herstellung eines Produkts oder einer Produktverpackung mit einer ertastbaren Markierung,
**dadurch gekennzeichnet, dass** die ertastbare Markierung nach einem Verfahren nach einem der vorhergehenden Ansprüche hergestellt wird.

14. Verfahren nach Anspruch 13,
**dadurch gekennzeichnet, dass** die ertastbare Markierung auf eine Oberfläche des Produkts oder der Produktverpackung aufgetragen wird, nachdem das Produkt hergestellt und gegebenenfalls. in der Produktverpackung verpackt wurde.

15. Verfahren nach mindestens einem der vorstehenden Ansprüche,
**dadurch gekennzeichnet, dass** die aufgetragene Markierung mittels mindestens eines Sensors berührungslos abgetastet wird, vorzugsweise mittels eines Infrarot-Licht-Sensors, und dass die von dem Sensor bereitgestellten Signale einer Steuerungseinrichtung zugeführt werden, um zu überprüfen, ob die aufgetragene Markierung einer bestimmten Vorgabe entspricht.

16. Verfahren nach mindestens einem der vorstehenden Ansprüchen,
**dadurch gekennzeichnet, dass** die Markierung aus einem mittels Strahlung, vorzugsweise ultravioletter Strahlung aushärtbaren Material besteht und dass die aufgetragene Markierung mittels einer von einer Strahlungsquelle abgegebenen Strahlung ausgehärtet wird.

17. Verpackung mit einer ertastbaren Markierung, welche aus einem Klebstoffmaterial, einem Lack, einem aushärtbaren Material, insbesondere einem Heißschmelzklebstoff besteht.

18. Verwendung einer Materialauftragsvorrichtung, umfassend
- mindestens eine Düsenöffnung (441 a,b) zur Abgabe eines flüssigen, aushärtbaren Materials auf eine Substratoberfläche und
- Mittel zur Relativbewegung der Düsenöffnung zu der Substratoberfläche,
zur Herstellung einer ertastbaren Markierung.

19. Verwendung nach Anspruch 18,
**dadurch gekennzeichnet, dass** als Material ein heißschmelzender Klebstoff aufgetragen wird und die Vorrichtung zur Abgabe des heißschmelzenden Klebstoffs ausgebildet ist.

20. Verwendung nach Anspruch 18 oder 19,
**dadurch gekennzeichnet, dass** die Vorrichtung Steuerungsmittel zum Steuern der Relativbewegung, des Zeitpunkts und/oder der Dauer der Abgabe des Materials umfasst, insbesondere zum Steuern des Auftrags gemäß Anspruch 12.

21. Verwendung nach einem der Ansprüche 18 bis 20,
**dadurch gekennzeichnet, dass** die ertastbare Markierung nach einem Verfahren nach einem der Ansprüche 1 - 13 hergestellt wird.

22. Materialauftragsvorrichtung, umfassend mindestens zwei voneinander beabstandete Düsenöffnungen (441a, b) zur Abgabe eines flüssigen, aushärtbaren Materials auf eine Substratoberfläche (500, 600, 700),
**dadurch gekennzeichnet, dass** der Abstand der Düsenöffnungen voneinander in einer ersten Raumrichtung dem Abstand zweier Markierungelemente eines ertastbaren Symbols entspricht.

23. Materialauftragsvorrichtung nach Anspruch 22,
**gekennzeichnet durch** Mittel zur Erzeugung einer Relativbewegung zwischen den Düsenöffnungen und der Substratoberfläche in einer zweiten Raumrichtung (470), welche etwa senkrecht zu der ersten Raumrichtung steht.
